# EUROPEAN PATENT APPLICATION

(11) **EP 4 303 006 A1**
(43) Date of publication of application: **10.01.2024**
(21) Application number: 22763445.8
(22) Date of filing: 04.03.2022
(51) Int. Cl.: B41J 2/01, C09D 11/30, C09D 11/54, B41M 5/00, D06P 5/00, D06P 5/30

(54) **PRETREATMENT LIQUID FOR INKJET PRINTING, INK SET, AND PRINTING METHOD**

(30) Priority: 04.03.2021 JP 2021033998
(71) Applicant: Nippon Kayaku Kabushiki Kaisha, Tokyo 102-8172 (JP)
(72) Inventor: ITO, Ryutaro, Tokyo 115-8588 (JP); HIGUCHI, Hiroko, Tokyo 115-8588 (JP); TERANISHI, Makoto, Tokyo 115-8588 (JP); KUROIWA, Hayato, Tokyo 115-8588 (JP)
(74) Representative: Murgitroyd & Company
(86) International application number: PCT/JP2022/009566
(87) International publication number: WO 2022/186395

(57) **Abstract**

To provide a pretreatment liquid for inkjet textile printing, having excellent color development in the inkjet textile printing process, excellent color fastness to washing on printed fabrics, and little pretreatment trace residue. The solution therefor is a pretreatment liquid for inkjet textile printing containing 100 parts by mass of a cationic polymer (A), 5 parts by mass or more and less than 100 parts by mass of a (meth)acrylate-based vinyl copolymer (B), and 2 parts by mass or more and less than 30 parts by mass of a crosslinking agent (C), each being in solid content, and water, the liquid having a solid content by weight of 2 mass% or more and 30 mass% or less.

## Description

### TECHNICAL FIELD

The present disclosure relates to a pretreatment liquid for inkjet textile printing, an ink set for inkjet textile printing comprising the pretreatment liquid, and an inkjet textile printing method using the pretreatment liquid.

### BACKGROUND

Mainstream textile printing methods include hand-drawing and screen-printing. Recently, however, the use of textile printing (inkjet textile printing) methods using inkjet printers has become more common.

Water-soluble dyes are used as colorants for inkjet textile printing. Such dyes have a vivid hue and can produce a wider range of colors. On the other hand, water-soluble dyes have a lower resistance to light, which leads to disadvantages of complicating processes such as fixing the dyes after the dyes are made to adhere to fibers and washing the fibers with water and, further, the treatment of waste dye liquids generated by washing with water, etc. For this reason, the use of water-insoluble colorants is gaining attention as an alternative to water-soluble dyes. In inkjet textile printing that use water-insoluble colorants, "bleeding" on fabric is problematic. "Bleeding" causes colorants to diffuse into the fabric without staying in the original coloring area, resulting in blurred printed images and reduced color development, such that there is a demand for pretreatment agents that can suppress blotting and improve color development.

### CITATION LIST

### Patent Literature

PTL 1: WO 2008/018406 A1

### SUMMARY

### (Technical Problem)

When the matters described in Patent Literature (PTL) 1 are applied to direct to garment printing, fabric such as pre-dyed cotton T-shirts suffers from problems in that the color development of printed material is extremely low due to a lack of aggregation action of a pretreatment liquid and a very large and noticeable color difference (hereinafter referred to as "treatment marks") between areas coated with the pretreatment liquid and areas not coated with the pretreatment liquid, which results from a large amount of resin emulsion being included to improve colorfastness.

Therefore, it would be helpful to provide a pretreatment liquid for inkjet textile printing with at least excellent color development and water resistance on printed material and with fewer treatment marks.

It would also be helpful to provide an ink set for inkjet textile printing comprising the above-described pretreatment liquid and an inkjet textile printing method using the above-described pretreatment liquid for inkjet textile printing.

### (Solution to Problem)

As a result of diligent investigation, the inventors have found that a pretreatment liquid for inkjet textile printing that contains at least water, a cationic polymer, a (meth)acrylate-based vinyl copolymer, and a crosslinking agent in a specific ratio, and that has a solid content by weight in solution within a specific range, produces a pretreatment solution with excellent color development and water resistance on printed material and with fewer treatment marks.

In other words, the present disclosure relates to the following aspects 1) to 13).
1) A pretreatment liquid for inkjet textile printing, containing:
   100 parts by mass of a cationic polymer (A);
   5 parts by mass or more and less than 100 parts by mass of a (meth)acrylate-based vinyl copolymer (B); and
   2 parts by mass or more and less than 30 parts by mass of a crosslinking agent (C), each being in solid content, and
   water,
   wherein the liquid has a solid content by weight of 2 mass% or more and 30 mass% or less.
2) The pretreatment liquid for inkjet textile printing according to aspect 1), wherein the crosslinking agent (C) includes any compound selected from the group consisting of a compound having a blocked isocyanate group, a compound having an oxazoline group, and a compound having a carbodiimide group.
3) The pretreatment liquid for inkjet textile printing according to aspect 1) or 2), wherein the cationic polymer (A) is a compound containing an epihalohydrin structural unit.
4) The pretreatment liquid for inkjet textile printing according to any one of aspects 1) to 3), wherein the cationic polymer (A) includes any resin selected from the group consisting of an epihalohydrin-modified polyamine resin, an epihalohydrin-modified polyamide resin, an epihalohydrin-modified polyamide polyamine resin, and an epihalohydrin-amine copolymer.
5) The pretreatment liquid for inkjet textile printing according to any one of aspects 1) to 4), wherein the (meth)acrylate-based vinyl copolymer (B) includes a copolymerized polymer derived from an alkyl (meth)acrylate (b1), a monomer having a carboxyl group (b2), and a styrene derivative (b3) as monomer components.
6) The pretreatment liquid for inkjet textile printing according to any one of aspects 1) to 5), which has a dynamic surface tension value at 25°C of 40 mN/m or more and 70 mN/m or less.
7) A textile printing method, comprising applying the pretreatment liquid for inkjet textile printing according to any one of aspects 1) to 6) to a fabric and subsequently discharging, from an inkjet printhead, an inkjet textile printing ink including pigments and water to record an image on the fabric.
8) A textile printing method, comprising:
   a pretreatment step of applying the pretreatment liquid for inkjet textile printing according to any one of aspects 1) to 6) to a fabric to form a moist precoat layer; and
   a step of discharging, from an inkjet printhead, to a portion or an entire area of the moist precoat layer, an inkjet textile printing ink including pigments and water, without drying the fabric after the pretreatment step, to record an image on the fabric,
   wherein the pretreatment liquid for inkjet textile printing is applied on the fabric in an amount per unit area exceeding 0.035 g/cm² and being less than 0.070 g/cm².
9) The textile printing method according to aspect 7) or 8), wherein the fabric is polyester or a blend including polyester.
10) The textile printing method according to aspect 9) comprising
   a step of drying, at 130°C or less, the fabric, on which the image has been formed, after the step of discharging, from the inkjet printhead, the inkjet textile printing ink including pigments and water to record the image on the fabric.
11) The textile printing method according to aspect 7) or 8), wherein the fabric is cotton or a blend including cotton.
12) The textile printing method according to any one of aspects 8) to 11), comprising
   a pressurization step of applying pressure to an area, on which the moist precoat layer has been formed, after the pretreatment step.
13) An ink set for inkjet textile printing comprising:
   the pretreatment liquid for inkjet textile printing according to any one of aspects 1) to 6); and
   an inkjet textile printing ink including pigments and water.

### (Advantageous Effect)

The present disclosure provides a pretreatment liquid for inkjet textile printing with excellent color development and water resistance on printed material and with fewer treatment marks.

### DETAILED DESCRIPTION

The following describes in detail embodiments for implementing the present disclosure. The present disclosure is not limited to the following embodiments and can be implemented with various variations within the scope of the features thereof. Unless otherwise noted, descriptions of "part" and "%" in the present specification, including the Examples section, are both based on mass.

### <Pretreatment Liquid for Inkjet Textile Printing>

The pretreatment liquid for inkjet textile printing (hereinafter referred to as "pretreatment liquid") contains at least water, a cationic polymer, a (meth)acrylate-based vinyl copolymer, and a crosslinking agent.

The pretreatment liquid is described in detail below.

The pretreatment liquid for inkjet textile printing contains:
100 parts by mass of a cationic polymer (A);
5 parts by mass or more and less than 100 parts by mass of a (meth)acrylate-based vinyl copolymer (B); and
2 parts by mass or more and less than 30 parts by mass of a crosslinking agent (C), each being in solid content, and
water,
wherein the liquid has a solid content by weight of 2 mass% or more and 30 mass% or less. In the present specification, "solid content" refers to non-volatile substances in each of the cationic polymer (A), the (meth)acrylate-based vinyl copolymer (B), and the crosslinking agent (C), and "solid content by weight" is described later.

### [Water]

The pretreatment liquid contains water. The water is not particularly limited, and pure water such as ion-exchanged water, ultra-filtration water, reverse osmosis water, and distilled water, or ultrapure water can be used. The content of the water is not particularly limited and can be determined as needed. To adjust the solid content by weight of the pretreatment liquid to a suitable range, the content of the water is preferably 70 mass% to 80 mass% relative to the total mass of the pretreatment liquid (100 mass%).

### [Cationic Polymer (A)]

The pretreatment liquid contains a cationic polymer (A). The inclusion of the cationic polymer (A) improves the aggregation of a later applied colorant coated with a resin in an inkjet textile printing ink. The colorant, the resin, and the ink are described later. As disclosed herein, the cationic polymer (A) may be abbreviated as "cationic polymer".

The cationic polymer is preferably a compound containing one or more structural units selected from the group consisting of an allylamine structural unit, a diallylamine structural unit, a diallylammonium structural unit, and an epihalohydrin structural unit, more preferably a compound containing one or more structural units selected from the group consisting of a diallylammonium structural unit, an allylamine structural unit, and an epihalohydrin structural unit, and particularly preferably a compound containing an epihalohydrin structural unit. All the above cationic polymers are strong electrolytes, and the cationic polymer has favorable dissolution stability in the pretreatment liquid, which results in a pigment in ink having excellent dispersion reduction ability.

The cationic polymer containing an allylamine structural unit may be appropriately selected from publicly known cationic polymers and may include, for example, polyallylamine hydrochloride, polyallylamine amide sulfate, allylamine hydrochloride/diallylamine hydrochloride copolymer, allylamine acetate/diallylamine acetate copolymer, allylamine acetate/diallylamine acetate copolymer, allylamine hydrochloride/dimethylallylamine hydrochloride copolymer, allylamine/dimethylallylamine copolymer, polydiallylamine hydrochloride, polymethyldiallylamine hydrochloride, polymethyldiallylamine amide sulfate, polymethyldiallylamine acetate, polydiallyldimethylammonium chloride, diallylamine acetate/sulfur dioxide copolymer, diallylmethylammonium ethyl sulfate/sulfur dioxide copolymer, methyldiallylamine hydrochloride/sulfur dioxide copolymer, diallyldimethylammonium chloride/sulfur dioxide copolymer, and diallyldimethylammonium chloride/acrylamide copolymer. Such a cationic polymer containing an allylamine structural unit may include commercially available cationic polymers available under the trade names of, for example, PAA-HCL-01, PAA-HCL-03, PAA-HCL-05, PAA-HCL-3L, PAA-HCL-10L, PAA-H-HCL, PAA-SA, PAA-01, PAA-03, PAA-05, PAA-08, PAA-15, PAA-15C, PAA-25, PAA-H-10C, PAA-D11-HCL, PAA-D41-HCL, PAA-D19-HCL, PAS-21CL, PAS-M-1L, PAS-M-1, PAS-22SA, PAS-M-1A, PAS-H-1L, PAS-H-5L, PAS-H-10L, PAS-92, PAS-92A, PAS-J-81L, and PAS-J-81 (produced by Nittobo Medical Co., Ltd.); and under the trade names of Hymo-Neo-600, Himoloc Q-101, Q-311, Q-501, Himax SC-502, and SC-505 (produced by Hymo Corporation).

The cationic polymer containing a diallylamine structural unit may be appropriately selected from publicly known cationic polymers and may include, for example, PAS-21CL, PAS-21, PAS-M-1L, PAS-M-1, PAS-M-1A, PAS-92, and PAS-92A (produced by Nittobo Medical Co., Ltd.), and Unisense KCA100L and KCA101L (produced by Senka Corporation).

The cationic polymer containing a diallylammonium structural unit may be appropriately selected from publicly known cationic polymers and may include, for example, hydrochloride or sulfuric acid ethyl salt of diallyldimethylammonium or diallylmethylethylammonium. Such a cationic polymer containing a diallylammonium structural unit may include commercially available cationic polymers, for example, PAS-H-1L, PAS-H-5L, PAS-H-10L, PAS-24, PAS-J-81L, PAS-J-81, and PAS-J-41 (produced by Nittobo Medical Co., Ltd.); and Unisense FPA100L, FPA101L, FPA102L, FPA1000L, FPA1001L, FPA1002L, FCA1000L, FCA1001L, and FCA5000L (produced by Senka Corporation). In addition, the commercially available cationic polymer compound containing a diallylamine structural unit and a diallylammonium structural unit may include PAS-880 (produced by Nittobo Medical Co., Ltd.).

The cationic polymer containing an epihalohydrin structural unit may be appropriately selected from publicly known cationic polymers and may include, for example, an epihalohydrin-modified polyamine resin, an epihalohydrin-modified polyamide resin, an epihalohydrin-modified polyamide polyamine resin, and an epihalohydrin-amine copolymer. Also, in terms of availability, epihalohydrin may be appropriately selected from epichlorohydrin or methyl epichlorohydrin. Printed materials obtainable by using the cationic polymers containing an epihalohydrin structural unit have excellent water resistance and the cationic polymer including an epihalohydrin structural unit may be suitably selected in this respect. Such a cationic polymer containing an epihalohydrin structural unit may include commercially available cationic polymers, for example, FL-14 (produced by SNF Co., Ltd.), Arafix 100, 251S, 255, and 255LOX (produced by Arakawa Chemical Industries, Ltd.), DK-6810, 6804, 6850, 6854, and 6885; WS-4010, 4011, 4020, 4024, 4027, and 4030 (produced by Seiko PMC Corporation), Unisense KHE100L and Papyogen P-105 (produced by Senka Corporation), Sumirez Resin 650(30), 675A, 6615, and SLX-1 (produced by Taoka Chemical Co., Ltd.), Catiomaster PD-7, 30, A, PDT-2, PE-10, PE-30, DT-EH, EPA-SK01, and TMHMDA-E (produced by Yokkaichi Chemical Company Limited), and Jetfix 36N, 38A, and 5052 (produced by Satoda Chemical Industrial Co., Ltd.).

The cationic polymer (A) preferably contains a resin selected from the group consisting of an epihalohydrin-modified polyamine resin, an epihalohydrin-modified polyamide resin, an epihalohydrin-modified polyamide polyamine resin, and an epihalohydrin-amine copolymer.

The cationic polymer may be synthesized by publicly known synthetic methods or may be a commercially available product.

The content of the cationic polymer is preferably 1.7 mass% to 8.0 mass%, more preferably 2.0 mass% to 7.0 mass%, and particularly preferably 2.5 mass% to 6.0 mass% of the total liquid weight of the pretreatment liquid. A content of 1.7 mass% or more results in the pretreatment liquid having an effective aggregation ability, which tends to favorably reduce bleed-through and increase whiteness. A content of 8.0 mass% or less tends to provide the pretreatment liquid with excellent storage stability and trace reduction.

The cationic polymer, in a 10 mass% aqueous solution at 25°C, has a viscosity of preferably 1.0 mPa s to 5.0 mPa s, more preferably 1.0 mPa s to 2.5 mPa s, even more preferably 1.0 mPa s to 2.0 mPa s, and particularly preferably 1.0 mPa·s to 1.5 mPa·s. Selecting a cationic polymer with a viscosity of 1.0 mPa·s to 5.0 mPa·s in a 10 mass% aqueous solution tends to improve flowability of the pretreatment liquid and color development during printing.

Considering the miscibility with other components contained in the pretreatment liquid, the water resistance of the fabric after pretreatment, the color fastness to washing and the adhesion, the cationic polymer has a weight average molecular weight of usually 300 to 40000, preferably 400 to 30000, preferably 500 to 20000, and more preferably 500 to 10000. The weight average molecular weight being 300 or more results in a pretreatment liquid having an effective aggregation ability, which tends to favorably reduce bleed-through and increase whiteness. The weight average molecular weight being 40000 or less enables the pretreatment liquid to be used as an aqueous solution, which tends to provide excellent storage stability. In addition, the weight average molecular weight being 40000 or less also tends to favorably reduce bleed-through and increase whiteness.

The weight average molecular weight of the cationic polymer can be measured by gel permeation chromatography (GPC) using standard polystyrene conversion.

### [(Meth)acrylate-based Vinyl Copolymer (B)]

The pretreatment liquid contains a (meth)acrylate-based vinyl copolymer (B). Applying the pretreatment liquid including a (meth)acrylate-based vinyl copolymer onto a surface of the fabric smooths the surface of the fabric to improve color development during printing and using the pretreatment liquid including a (meth)acrylate-based vinyl copolymer in combination with a later-described crosslinking agent improves the water resistance of the printed fabric. In this specification, the (meth)acrylate-based vinyl copolymer (B) may be abbreviated as "(meth)acrylate-based vinyl copolymer".

The (meth)acrylate-based vinyl copolymer is obtainable by polymerizing two or more monomer components selected from at least (meth)acrylic acid or (meth)acrylic acid esters.

In terms of stability when it is mixed with the above cationic polymer, water resistance of a subsequently formed coating film, etc., the (meth)acrylate-based vinyl copolymer preferably includes a copolymerized polymer derived from an alkyl (meth)acrylate (b1), a monomer having a carboxy group (b2), and a styrene derivative (b3) as monomer components.

The (meth)acrylate-based vinyl copolymer may be a commercially available product or a synthetic product, and the synthetic product may be synthesized by publicly known radical polymerization methods using publicly known monomers. The weight average molecular weight (Mw) of the (meth)acrylate-based vinyl copolymer is preferably 1000 or more, more preferably 5000 or more, even more preferably 10000 or more, and particularly preferably 100000 or more. In terms of fixation after heating and color fastness to dyeing, the molecular weight of the (meth)acrylate-based vinyl copolymer is preferably 100000 or more.

The (meth)acrylate-based vinyl copolymer may also include monomer components other than (meth)acrylic acid and (meth)acrylic acid esters, and may preferably include, in particular, a styrene derivative as a monomer component. Examples of styrene derivatives may include styrene, alkylsubstituted styrene (e.g., α-methylstyrene), and halogen-substituted styrene (e.g., 2-chlorostyrene).

Commercially available products of the (meth)acrylate-based vinyl copolymer include, for example, Mowinyl 6751D (glass transition point - 32°C), Mowinyl 6960 (glass transition point -32°C), Mowinyl 6963 (glass transition point -28°C), Mowinyl 702 (glass transition point -19°C), Mowinyl 8020 (glass transition point -22°C), Mowinyl 966A (glass transition point - 29°C), Mowinyl 6718 (glass transition point 3°C), Mowinyl 6750 (glass transition point 0°C), and Mowinyl 7720 (glass transition point 4°C) produced by Japan Coating Resin Corporation; Joncryl PDX-7341 (glass transition point 15°C) and Joncryl PDX-7370 (glass transition point 12°C) produced by BASF; and Neocryl A-1094 (glass transition point 21°C); and Neocryl BT-62 (glass transition point 22°C) produced by DSM. Any one of the (meth)acrylate-based vinyl copolymers may be used alone or in combination of two or more.

The amount of the (meth)acrylate-based vinyl copolymer in the pretreatment liquid relative to the total liquid weight of the pretreatment liquid is preferably 0.2 mass% or more, more preferably 1 mass% or more, and may be, for example, 2 mass% or more. The amount of the (meth)acrylate-based vinyl copolymer in the pretreatment liquid relative to the solid content by weight of the pretreatment liquid is preferably 10 mass% or less, more preferably 8 mass% or less, and even more preferably 5 mass% or less, and may be, for example, 3 mass% or less.

The amount of the (meth)acrylate-based vinyl copolymer is equivalent to the solid content weight (i.e., the amount of resin only), and the same applies hereinafter.

To obtain an effect of improving the texture of the fabric, for example, the feel of the fabric, after a later-described pretreatment step, the (meth)acrylate-based vinyl copolymer usually has a glass transition temperature (Tg) of 10°C or less, and preferably has a glass transition temperature (Tg) of -10°C or less. The lower limit of Tg is not particularly limited, and is preferably -40°C or more.

To obtain an effect of improving the breaking, cracking, color fastness to washing, and abrasion resistance of images printed on fabrics as described below, the (meth)acrylate-based vinyl copolymer preferably has a break point elongation of 200% to 500% and an elastic modulus of 20 MPa to 400 MPa. The break point elongation is a value obtainable by preparing a film of approximately 60 µm thickness from the (meth)acrylate-based vinyl copolymer using a publicly known method and measuring the break point elongation under conditions including a tensile test gauge length of 20 mm and a tensile speed of 100 mm/minute. The elastic modulus is the tensile modulus, which is determined in the same manner as the break point elongation measurement described above; by preparing a film of approximately 60 µm thickness from the (meth)acrylate-based vinyl copolymer to form a tensile test dumbbell with a parallel part width of 10 mm and a length of 40 mm, and conducting a tensile test in accordance with Japanese Industrial Standard (JIS) K7161:1994.

The (meth)acrylate-based vinyl copolymer may be a water-soluble polymer or a water-dispersible polymer (O/W type emulsion), and is preferably a water-dispersible polymer in terms of improving water resistance. For water-dispersible polymers, the (meth)acrylate-based vinyl copolymer has a D50 (average particle size) of usually 30 nm to 300 nm and preferably 80 nm to 300 nm. With D50 falling within the aforementioned ranges, the (meth)acrylate-based vinyl copolymer can be favorably dispersed in the pretreatment liquid.

Furthermore, to provide a favorable abrasion resistance of colored images after textile printing on fabrics, the lower limit of the D50 is preferably about 100 nm.

In the present specification, "(meth)acrylic" represents any acrylic and corresponding methacrylic, "(meth)acrylate" represents any acrylate and corresponding methacrylate, and "(meth)acryloyl" represents any acryloyl and corresponding methacryloyl.

### [Crosslinking Agent (C)]

The above pretreatment liquid contains a crosslinking agent. The crosslinking agent may include a compound having a blocked isocyanate group, a compound having an epoxy group, a compound having an oxazoline group, a compound having a carbodiimide group, a compound having a methylol group, a compound having a cyclocarbonate group, a compound having an azirinyl group, a compound having an acetoacetyl group, and a compound having a silanol group. These compounds may be used alone or in combination of two or more. In terms of improving water resistance, these compounds preferably include a compound having a carbodiimide group, a compound having an oxazoline group, a compound having a blocked isocyanate group, and a compound having an epoxy group, and more preferably include a compound selected from the group consisting of a compound having a blocked isocyanate group, a compound having an oxazoline group, and a compound having a carbodiimide group. The crosslinking agent may be a water-soluble compound or a water-dispersible compound, and is preferably the water-dispersible compound in terms of storage stability.

In terms of improving each of the storage stability, the abrasion resistance, the solvent resistance, and the substrate adhesion of the pretreatment liquid (pretreatment composition), the compound having a carbodiimide group is preferably blended in the pretreatment liquid as an aqueous solution or an emulsion. In terms of improving the storage stability of the pretreatment liquid, the compound having a carbodiimide group is preferably blended in the pretreatment liquid as an aqueous solution. Commercially available products of the compound having a carbodiimide group may include compounds available under the trade names of Carbodilite E-02, Carbodilite E-03A, Carbodilite E-05, Carbodilite V-02, Carbodilite V-02-L2, and Carbodilite V-04 (produced by Nisshinbo Chemical Inc.). Among these products, Carbodilite E-02, Carbodilite E-05, and Carbodilite V-04 are preferred in terms of the storage stability of the pretreatment liquid.

In terms of improving each of the performances of the storage stability, the abrasion resistance, the solvent resistance, and the adhesion of the pretreatment liquid (pretreatment composition), the compound having an oxazoline group is preferably blended in the pretreatment liquid as an aqueous solution or emulsion, and is preferably a polyoxazoline compound having two or more oxazoline groups in one molecule.

Commercially available products of the compound having an oxazoline group may include, as water-soluble type compounds, compounds available under the trade names of "Epocros WS Series" such as "Epocros WS-300", "Epocros WS-500", and "Epocros WS-700" (produced by Nippon Shokubai Co., Ltd.); and as emulsion type compounds, compounds available under the trade names of "Epocros K Series" such as Epocros K-2010E and Epocros K-2020E (produced by Nippon Shokubai Co. Ltd.). Among these products, Epocros WS-300, Epocros WS-500, and Epocros WS-700 are preferred in terms of the storage stability of the pretreatment liquid.

The compound having a blocked isocyanate group is obtainable by blocking an isocyanate group in a polyisocyanate compound with a blocking agent. The highly reactive isocyanate groups are blocked, which stabilizes the isocyanate groups, thereby improving the storage stability of the pretreatment liquid (aqueous composition) while forming a strong ink film after a crosslinking reaction. The polyisocyanate compound has two or more isocyanate groups in one molecule and include aliphatic isocyanates, alicyclic isocyanates, aromatic aliphatic isocyanates, aromatic isocyanates, and modified forms thereof. Modified forms of the polyisocyanate compound include multimeric forms such as isocyanurate forms, burette forms, and adducts with polyhydric alcohols such as trimethylolpropane and pentaerythritol.

The aliphatic isocyanates preferably include diisocyanates having a linear or branched aliphatic hydrocarbon group between two isocyanate groups. The carbon number of the aliphatic hydrocarbon group is preferably 2 or more, more preferably 3 or more, and preferably 10 or less, more preferably 9 or less, and even more preferably 8 or less. Specifically, the aliphatic hydrocarbon group may include tetramethylene diisocyanate, pentamethylene diisocyanate, hexamethylene diisocyanate (HDI), heptamethylene diisocyanate, octamethylene diisocyanate, decamethylene diisocyanate, dodecamethylene diisocyanate, and 2,2,4- or 2,4,4-trimethylhexamethylene diisocyanate. The alicyclic isocyanate may include hydrogenated xylylene diisocyanate (H6XDI), 1,4-cyclohexane diisocyanate, 4,4'-dicyclohexylmethane diisocyanate (H12MDI), isophorone diisocyanate (IPDI), and 2,5- or 2,6-norbornane diisocyanate. The aromatic aliphatic isocyanate may include m- or p-xylylene diisocyanate (XDI) and tetramethylxylylene diisocyanate (TMXDI). The aromatic isocyanate may include 1,3- or 1,4-phenylene diisocyanate, 2,4- or 2,6-tolylene diisocyanate (TDI), 4,4'- or 2,4'-diphenylmethane diisocyanate (MDI), m- or p-isocyanatophenylsulfonyl isocyanate, 4,4'-diisocyanatobiphenyl, 4,4'-diisocyanato-3,3'-dimethylbiphenyl, 1,5-naphthylene diisocyanate, and 2,6-dimethylbenzene-1,4-diisocyanate.

The above blocking agents include amines such as 3,5-dimethylpyrazole (DMP), 1,2,4-triazole, and diisopropylamine; phenols such as phenol and cresol; oximes such as methyl ethyl ketoxime; lactams such as ε-caprolactam; and compounds with active hydrogen such as diethyl malonate, ethyl acetoacetate, and other active methylene compounds. Among these blocking agents, 3,5-dimethylpyrazole (DMP) and methyl ethyl ketoxime are preferred, and 3,5-dimethylpyrazole (DMP) is more preferred.

In terms of improving each of the performances of the storage, the stability, the abrasion resistance, and the adhesion, the compound having the blocked isocyanate group preferably has a dissociation temperature of 120°C or more and more preferably a dissociation temperature of 125°C or more. The storage stability tends to be better at a temperature of 120°C or more. In terms of suppressing damage such as deformation of recording media, the dissociation temperature is preferably 200°C or less and more preferably 180°C or less. In particular, when polyester or blends containing polyester are used for fabrics, the dissociation temperature is preferably 130°C or less because the drying step after printing must be conducted at a drying temperature of 130°C or less to prevent dye migration (hereinafter referred to simply as "dye transfer").

Commercially available products of the above compound having a blocked isocyanate group may include compounds available under the trade names of Trixene blocked isocyanates Aqua BI120, Aqua BI200, Aqua BI522, 7950, 7951, 7960, 7961, 7982, 7990, 7991, and 7992 (produced by Baxenden Chemicals Ltd.); the trade names of DM-6400, Meikanate DM-3031CONC, Meikanate DM-35HC, Meikanate TP-10, Meikanate ST, Meikanate PRO, and NBP-873D (produced by Meisei Chemical Works, Ltd.); the trade names of Elastron BN-69, BN-77, BN-27, and BN-11 (produced by DKS Co. Ltd.); the trade names of Takenate WB-700, WB-770, and WB-920 (produced by Mitsui Chemicals Polyurethanes, Inc.); the trade names of Duranate MF-K60B, SBN-70D, MF-B60B, MF-B90B, 17B-60P, TPA-B80B, TPA-B80E, and E402-B80B (produced by Asahi Kasei Corporation); and the trade name of Fixer N (produced by Matsui Shikiso Chemical Laboratory Co., Ltd.), etc.

The solid content ratios of the cationic polymer (A), the (meth)acrylate-based vinyl copolymer (B), and the crosslinking agent (C) in the pretreatment liquid for inkjet textile printing are 100 parts by mass for the cationic polymer (A), 5 parts by mass or more and less than 100 parts by mass for the (meth)acrylate-based vinyl copolymer (B), and 2 parts by mass or more and less than 30 parts by mass for the crosslinking agent (C). The solid content ratios are preferably 100 parts by mass for the cationic polymer (A), 90 to 5 parts by mass for the (meth)acrylate-based vinyl copolymer (B), and 2 to 20 parts by mass for the crosslinking agent (C). The solid content ratios are more preferably 100 parts by mass for the cationic polymer (A), 60 to 5 parts by mass for the (meth)acrylate-based vinyl copolymer (B), and 2 to 15 parts by mass for the crosslinking agent (C). The solid content ratios are particularly preferably 100 parts by mass for the cationic polymer (A), 40 to 10 parts by mass for the (meth)acrylate-based vinyl copolymer (B), and 2 to 10 parts by mass for the crosslinking agent (C). The solid content ratios are most preferably 100 parts by mass for the cationic polymer (A), 30 to 10 parts by mass for the (meth)acrylate-based vinyl copolymer (B), and 3 to 8 parts by mass for the crosslinking agent (C).

Regarding the ratios of the cationic polymer (A) and the (meth)acrylate-based vinyl copolymer (B) in the pretreatment liquid, it is assumed that the cationic polymer (A), when present in a large amount, has a significant effect of causing the colorant to aggregate, which prevents penetration and diffusion of the ink into the fabric, thus improving the color development of the ink on the surface of the fabric. In addition, the (meth)acrylate-based vinyl copolymer (B) has a higher film-forming property than the cationic polymer (A), and thus it is also assumed that reducing the blending ratio of (B) will have an effect of reducing trace residue on the fabric. In addition, when the ratio of the crosslinking agent (C) is large, the trace residue increases as described later. Therefore, we believe that using the above ratios will demonstrate the above-described both effects of water resistance and reducing trace residue.

The solid content by weight of the above pretreatment liquid for inkjet textile printing is 2 mass% or more and 30 mass% or less, preferably 3 mass% to 20 mass%, more preferably 4 mass% to 15 mass%, and most preferably 5 mass% to 10 mass%. When using a commercially available heat-drying water meter to heat dry 5 g of the pretreatment liquid at 160°C, the solid content by weight represents the weight percentage of solid content remaining in the water meter.

The pretreatment liquid for inkjet textile has a dynamic surface tension value at 25°C that is preferably 40 mN/m or more and 70 mN/m or less and more preferably 45 mN/m or more and 65 mN/m or less. The dynamic surface tension can be measured, for example, using a bubble pressure dynamic surface tension meter.

### [Other Components]

Various additives, such as aqueous solvents, surface tension regulators, viscosity regulators, mold inhibitors, preservatives, pH regulators, chelating agents, rust inhibitors, ultraviolet absorbers, and antioxidants, can be added to the above pretreatment liquid as needed for purposes such as storage stability, alleviating clogging, and preventing deterioration of fabric fibers.

### [Aqueous Solvent]

The pretreatment liquid can contain an aqueous solvent as another component. The aqueous solvent is not particularly limited, and is preferably an aqueous solvent that functions as a penetrating agent or humectant. One aqueous solvent may be used alone or in combination of two or more.

### [Penetrating Agent]

The pretreatment liquid may contain a penetrating agent as the aqueous solvent. The inclusion of a penetrating agent improves the permeability of the pretreatment liquid, allowing the pretreatment liquid to quickly penetrate the fabric and reduce treatment marks.

The penetrating agent may preferably include, for example, alkyl ethers of polyhydric alcohols (glycol ethers) and 1,2-alkyl diols. The glycol ethers include, without being limited to, for example, ethylene glycol monomethyl ether, ethylene glycol monoethyl ether, ethylene glycol monopropyl ether, ethylene glycol monobutyl ether, ethylene glycol monomethyl ether acetate, diethylene glycol monomethyl ether, diethylene glycol monoethyl ether, diethylene glycol monopropyl ether, diethylene glycol monobutyl ether, diethylene glycol mono-t-butyl ether, triethylene glycol monobutyl ether, 1-methyl-1-methoxybutanol, propylene glycol monomethyl ether, propylene glycol monoethyl ether, propylene glycol monopropyl ether, propylene glycol monobutyl ether, dipropylene glycol monomethyl ether, dipropylene glycol monoethyl ether, dipropylene glycol monopropyl ether, and dipropylene glycol monobutyl ether. The 1,2-alkyl diols include, without being limited to, for example, 1,2-pentanediol and 1,2-hexanediol. In addition to these, straight-chain hydrocarbon diols such as 1,3-propanediol, 1,4-butanediol, 1,5-pentanediol, 1,6-hexanediol, 1,7-heptanediol and 1,8-octanediol can also be mentioned.

The content of the penetrating agent relative to the total mass (100 mass%) of the pretreatment liquid is preferably 0.1 mass% to 20 mass%, more preferably 0.3 mass% to 10 mass%, and even more preferably 0.5 mass% to 5 mass%. When the content is 0.1 mass% or more, the degree of penetration of the pretreatment liquid into the fabric can be increased. When the content is 20 mass% or less, excessive penetration of the pretreatment liquid component into the fabric can be prevented, and a decrease in color development during printing can be suppressed.

### [Humectant]

The above pretreatment liquid may contain a humectant (moistening agent) as an aqueous solvent other than the above penetrating agent. The humectant is not particularly limited, and any humectant generally used for inkjet inks can be used. A high boiling point humectant having a boiling point of 180°C or more, and more preferably 200°C or more may be used. A boiling point within the above ranges enables favorable water retention and moistening properties to be imparted to the pretreatment liquid.

The high boiling point humectant is not particularly limited, and includes, for example, 2-pyrrolidone, N-methyl-2-pyrrolidone, N-ethyl-2-pyrrolidone, ethylene glycol, propylene glycol, diethylene glycol, triethylene glycol, pentamethylene glycol, trimethylene glycol, 2-butene-1,4-diol, 2-ethyl-1,3-hexanediol, 2-methyl-2,4-pentanediol, tripropylene glycol, polyethylene glycol with a number average molecular weight of 2000 or less, 1,3-propylene glycol, isopropylene glycol, isobutylene glycol, glycerin, meso-erythritol, and pentaerythritol.

The inventors believe that the pretreatment liquid containing a high boiling point humectant can suppress solidification of pretreatment components otherwise caused by evaporation of water at a gas-liquid interface, and thus enable a pretreatment liquid to be obtained that can maintain the flowability for a long time. In spray-type coating equipment, solidification of the pretreatment liquid around a spray unit can also be suppressed, thereby reducing the deterioration of the work environment. The content of the humectant is not particularly limited, can be determined as needed, and is preferably 1% to 20%, and even more preferably 1% to 10%.

### [Surface Tension Regulator]

The pretreatment liquid can contain a surface tension regulator as another component. The type of surface tension regulator is not particularly limited, and is capable of regulating the static surface tension and dynamic surface tension of the pretreatment liquid. The surface tension regulator is preferably a surfactant selected from, for example, acetylene glycol surfactants and polyalkylene glycol surfactants. The inclusion of a surface tension regulator suppresses an increase in viscosity of the pretreatment liquid and suppresses the aggregation of components at a gas-liquid interface, making storage stability more favorable.

The acetylene glycol surfactants preferably include a surfactant selected, for example, from 2,4,7,9-tetramethyl-5-decyne-4,7-diol, 2,4,7,9-tetramethyl-5-decyne-4,7-diol, 2,4-dimethyl-5-decyne-4-ol, and 2,4-dimethyl-5-decyne-4-ol, and 2,4-dimethyl-5-decyne-4-ol or alkylene oxide adducts thereof, and more preferably a surfactant selected from the alkylene oxide adducts. The alkylene oxides include C2 to C4 straight chain, branched chain, and cyclic alkylene oxides. Among these alkylene oxides, straight chain or branched chain alkylene oxide is preferred. Surfactants selected from the above alkylene oxide adducts may include, for example, the Surfynol series (420, 440, 465, 61, etc.) and the Olfine series (E1004, E1010, EXP-4001, etc.) produced by Nissin Chemical Industry Co., Ltd.

The polyalkylene glycol surfactants are preferably a surfactant selected, for example, from polyoxyalkylene alkyl ether (such as polyoxyethylene alkyl ether), fatty acid ethylene oxide adduct, higher alkylamine ethylene oxide adduct, and polyoxyalkylene polyoxyalkylene glycol. Among these polyalkylene glycol surfactants, polyoxyalkylene polyoxyalkylene glycol is preferred, and polyoxyethylene polyoxypropylene glycol is more preferred.

The polyoxyalkylene alkyl ether may include polyoxyalkylene branched decyl ether, polyoxyalkylene tridecyl ether, polyoxyethylene isodecyl ether, polyoxyalkylene lauryl ether, and other polyoxyalkylene alkyl ethers.

Examples of commercially available products thereof may include, for example, Neugen XL-40, 50, 60, 70, 80, 100, 140, and 160; and Neugen TDS-30, 50, 70, 80, 90, 100, and 120 produced by DKS Co. Ltd.

The fatty acid ethylene oxide adduct may include ethylene oxide adduct of stearic acid and polyethylene glycol laurate. Examples of commercially available products thereof may include, for example, Emanone 1112, 3199V, 3299V, 3299VR, and 3201M-V produced by Kao Corporation.

Examples of commercially available products of the higher alkyl amine ethylene oxide adducts may include Amiet 102, 105, 105A, 302, and 320 produced by Kao Corporation.

Examples of commercially available products of the polyoxyalkylene polyoxyalkylene glycols may include Emulgen PP-290 (polyethylene glycol/polypropylene glycol copolymer 160/30) produced by Kao Corporation; NEWPOL PE-61, PE-62, PE-64, PE-68, PE-71, PE-74, PE-75, PE-78, and PE-108 (polyoxyethylene polyoxypropylene block copolymer) produced by Sanyo Chemical Industries, Ltd.; EPAN 410, 420, 450, 485, 680, 710, 720, 740, 750, 785, U-103, U-105, and U-108 (polyoxyethylene polyoxypropylene glycol in which the polypropylene glycol has a weight average molecular weight of about 950 to 4000 and the polyoxyethylene content is about 5 to 95%) produced by DKS Co. Ltd.

The content of the surface tension regulator relative to the total mass of the pretreatment liquid is usually 0.05% to 5%, preferably 0.05% to 3%, more preferably 0.05% to 1%, and even more preferably 0.1% to 0.5%. Such content improves the handling properties and color development during application. The pretreatment liquid also tends to have excellent storage stability.

### [Viscosity Regulator]

The pretreatment liquid can contain a viscosity regulator as another component. The viscosity regulator may include, for example, starches from corn, wheat, and other grains; a cellulose compound such as carboxymethylcellulose and hydroxymethylcellulose; polysaccharides such as sodium alginate, gum arabic, locust bean gum, toranto gum, guar gum, and tamarind seeds, proteins such as gelatin and casein; natural water-soluble polymers such as tannins and lignin; and synthetic water-soluble polymer compounds, including polyvinyl alcohol, polyethylene oxide, and those including acrylic acid, maleic anhydride and so on. The content of the viscosity regulator relative to the total mass of the pretreatment liquid is usually about 20% or less.

### [Mold Inhibitor]

The pretreatment liquid can contain a mold inhibitor as another component. Specific examples of the mold inhibitor may include sodium dehydroacetate, sodium benzoate, sodium pyridinethione-1-oxide, p-hydroxybenzoic acid ethyl ester, 1,2-benzisothiazolin-3-one and salts thereof.

### [Preservative]

The pretreatment liquid can contain a preservative as another component. Examples of the preservative may include compounds that are, for example, organosulfur-based, organonitrogen sulfur-based, organohalogen-based, haloarylsulfone-based, iodopropagyl-based, haloalkylthio-based, nitrile-based, pyridine-based, 8-oxyquinoline-based, benzothiazole-based, isothiazoline-based, dithiol-based, pyridine oxide-based, nitropropane-based, organotin-based, phenol-based, quaternary ammonium salt-based, triazine-based, thiazine-based, anilide-based, adamantane-based, dithiocarbamate-based, brominated indanone-based, benzyl bromoacetate-based, and inorganic salt-based. Specific examples of the organohalogen-based compounds include sodium pentachlorophenol. Specific examples of the pyridine oxide-based compounds include sodium 2-pyridinethiol-1-oxide. Specific examples of the isothiazoline-based compounds may include 1,2-benzisothiazolin-3-one, 2-n-octyl-4-isothiazolin-3-one, 5-chloro-2-methyl-4 isothiazolin-3-one, 5-chloro-2-methyl-4-isothiazolin-3-one magnesium chloride, 5-chloro-2-methyl-4-isothiazolin-3-one calcium chloride, and 2-methyl-4-isothiazolin-3-one calcium chloride. Examples of other preservatives (preservative mold inhibitors) may include anhydrous sodium acetate, sodium sorbate, sodium benzoate, and those available under the product names of Proxel GXL (S) and Proxel XL-2 (S), produced by Lonza.

### [pH Regulator]

The pretreatment liquid can contain a pH regulator as another component. The pH regulator may be any substance that can control the pH of the pretreatment liquid, for example, in the range of 4 to 11 without adversely affecting the pretreatment liquid to be prepared. Specific examples of the pH regulator may include alkali metal carbonates such as lithium carbonate, sodium carbonate, sodium hydrogen carbonate, and potassium carbonate; sodium silicate, alkali metal salts of organic acids such as potassium acetate; phosphates such as disodium phosphate; and organic amino compounds such as triethanolamine and diethanolamine. Water-soluble polymeric amino compounds such as water-soluble polyamines and polyimines, which can also serve as the viscosity regulator, may also be used.

### [Chelating Agent]

The pretreatment liquid can contain a chelating agent as another component. Specific examples of the chelating agent may include disodium ethylenediaminetetraacetate, sodium nitrilotriacetate, sodium hydroxyethyl ethylenediaminetriacetate, sodium diethylenetriamine pentaacetate, and sodium uracil diacetate.

### [Rust Inhibitor]

The pretreatment liquid can contain a rust inhibitor as another component. Specific examples of the rust inhibitor may include acid sulfite, sodium thiosulfate, ammonium thioglycolate, diisopropylammonium nitrite, pentaerythritol tetranitrate, and dicyclohexylammonium nitrite.

### [Ultraviolet Absorber]

The pretreatment liquid can contain an ultraviolet absorber (in particular a water-soluble ultraviolet absorber) as another component. Specific examples of the water-soluble ultraviolet absorber include sulfonated benzophenone-based compounds, benzotriazole-based compounds, salicylic acid-based compounds, cinnamic acid-based compounds, and triazine-based compounds.

### [Antioxidant]

The pretreatment liquid can contain an antioxidant as another component. Various organic and metal complex antioxidants (also called "fading inhibitors") for example can be used as the antioxidant. Specific examples of the organic antioxidants may include hydroquinones, alkoxyphenols, dialkoxyphenols, phenols, anilines, amines, indanes, chromans, alkoxyanilines, and heterocycles.

### All of the aforementioned components, etc., may be used alone or in combination of two or more.

For all of the above, combinations of the preferred compounds are more preferred, and combinations of the more preferred compounds are even more preferred. The same applies to combinations of preferred compounds and more preferred compounds, etc.

### [Preparation of the Pretreatment Liquid]

The pretreatment liquid can be prepared, for example, as follows. Water, a cationic polymer, an acrylate-based vinyl copolymer, a crosslinking agent, and, as necessary, preparation agents such as those listed above are further added, stirred and mixed, and then filtered as necessary. However, the method of preparing the pretreatment liquid according to the present disclosure is not limited to the above.

### <Ink for Inkjet Textile Printing>

The inkjet textile printing ink includes a pigment and water. The water may be the same as that described in the above section on the pretreatment liquid for inkjet textile printing. As used herein, the inkjet textile printing ink may be abbreviated to an ink composition or an ink.

### [Pigment]

The above-described pigments are not particularly limited, and any publicly known pigment can be used. Publicly known pigments may include inorganic pigments, organic pigments, and extender pigments.

Examples of the above inorganic pigments include carbon black, metal oxides, hydroxides, sulfides, ferrocyanides, and metal chlorides. Among these inorganic pigments, carbon black is preferred as a black pigment. The carbon black has different types, which include, for example: thermal black and acetylene black which are obtainable by thermal decomposition; oil furnace black, gas furnace black, lamp black, gas black, and channel black which are obtainable by incomplete combustion.

Among the above carbon blacks, the preferred carbon blacks are acetylene black, oil furnace black, gas furnace black, lamp black, and channel black.

Specific examples of the carbon blacks may include, for example, Raven 760 ULTRA, Raven 780 ULTRA, Raven 790 ULTRA, Raven 1060 ULTRA, Raven 1080 ULTRA, Raven 1170, Raven 1190 ULTRA II, Raven 1200, Raven 1250, Raven 1255, Raven 1500, Raven 2000, Raven 2500 ULTRA, Raven 3500, Raven 5000 ULTRA II, Raven 5250, Raven 5750, and Raven 7000 (produced by Columbia Carbon); Monarch 700, Monarch 800, Monarch 880, Monarch 900, Monarch 1000, Monarch 1100, Monarch 1300, Monarch 1400, Regal 1330R, Regal 1400 R, Regal 1660 R, and Mogul L (produced by Cabot Corporation); Color Black FW1, Color Black FW2, Color Black FW2 V, Color Black FW 200, Color Black S 150, Color Black S 160, Color Black S 170, Printex 35, Printex U, Printex V, Printex 140 U, Printex 140 V, Special Black 4, Special Black 4A, Special Black 5, and Special Black 6 (produced by Degussa AG); and MA 7, MA 8, MA 100, MA 600, MCF-88, No. 25, No. 33, No. 40, No. 47, No. 52, No. 900, and No. 2300 (produced by Mitsubishi Chemical Corporation).

Among the above inorganic pigments, metal oxides, for example, are preferably used as white inorganic pigments. Examples of the metal oxides include a zinc oxide, a titanium oxide, and a zirconia oxide, with titanium oxide being preferred. Types of the titanium oxide include rutile and anatase. The titanium oxide may be used as is as a powder, or the surface thereof may be treated with silicon dioxide, aluminum oxide, zirconia oxide, zinc oxide, or an organic material containing a hydroxyl group. Among these options, surface-treated titanium oxide is preferred. Specific examples of the titanium oxide may include, for example, DUAWHITETCR-52, TITONER-32, TITONER-7E, TITONER-21, TITONER-62N, and TITONER-42 (produced by Sakai Chemical Industry Co., Ltd.); TIPAQUECR-50, TIPAQUECR-50-2, TIPAQUECR-58, TIPAQUECR-60, TIPAQUECR-80, and TIPAQUECR-90 (produced by Ishihara Sangyo Kaisha, Ltd.); TITANIX JA-600 A, and TITANIX JR-605 (produced by Teika Corporation); and ST-455, ST-455 WB, ST-457 SA, and ST-457 EC (produced by Titan Kogyo, Ltd.).

The above-described organic pigments include, for example, azo pigments containing at least one azo group in the molecule, phthalocyanine pigments, quinacridone pigments, isoindolinone pigments, dioxazine pigments, perylene pigments, perinone pigments, thioindigo pigments, anthraquinone pigments, and quinophthalone pigments. Specific examples of the organic pigments may include C.I. Pigment Yellow 1, 2, 3, 12, 13, 14, 16, 17, 24, 55, 73, 74, 75, 83, 93, 94, 95, 97, 98, 108, 114, 128, 129, 138, 139, 150, 151, 154, 155, 180, 185, 193, 199, 202 and other yellow pigments; C. I. Pigment Red 5, 7, 12, 48, 48:1, 57, 88, 112, 122, 123, 146, 149, 166, 168, 177, 178, 179, 184, 185, 202, 206, 207, 254, 255, 257, 260, 264, 272, and other Red pigments; C.I. Pigment Blue 1, 2, 3, 15, 15:1, 15:2, 15:3, 15:4, 15:6, 16, 22, 25, 60, 66, 80, and other blue pigments; C.I. Pigment Violet 19, 23, 29, 37, 38, 50, and other violet pigments; C.I. Pigment Orange 13, 16, 36, 34, 43, 68, 69, 71, 73, and other orange to brown pigments; C.I. Pigment Green 7, 36, 54, and other green pigments; and C.I. Pigment Black 1, and other black pigments.

Examples of the above-described extender pigments include silica, calcium carbonate, talc, clay, barium sulfate, and white carbon. These extender pigments may be used alone, and are usually used in combination with inorganic pigments or organic pigments.

The above-described pigments are usually used alone. However, two or more pigments may be used in combination as necessary. Examples of combinations include organic pigments and extender pigments, and organic pigments and inorganic pigments. In addition to organic pigments and inorganic pigments, extender pigments can also be used to improve the flowability of the pretreatment liquid. In addition, two or more pigments selected from inorganic pigments and organic pigments can be used in combination to adjust the hue of the dye. The purposes of hue adjustment here may include obtaining a dyed product with shading, expanding the range of dyeing colors. For such purposes, several organic pigments can be used in combination to achieve the desired hue.

### [Other Components]

In addition to the above pigments and water, various additives such as resin emulsions, aqueous solvents, surfactants, viscosity regulators, mold inhibitors, preservatives, pH regulators, chelating agents, rust inhibitors, ultraviolet absorbers, and antioxidants can be added to the inkjet textile printing ink as other components to favorably maintain storage stability and printhead discharge reliability, alleviate clogging, or prevent ink degradation. The details of each additive other than the resin emulsions and the surfactants are the same as those described for the pretreatment liquid for inkjet textile printing and are therefore omitted here.

### [Resin Emulsion]

The resin emulsion may include emulsions formed, for example, from a styrene-butadiene resin, an acrylic resin, an epoxy resin, a urethane resin, a polyether resin, a polyamide resin, an unsaturated polyester resin, a phenol resin, a silicone resin, a fluororesin, a polyvinyl resin (polyvinyl chloride, polyvinyl acetate, polyvinyl alcohol, etc.), an alkyd resin, a polyester resin, an amino resin (melanin resin, urea-formaldehyde resin, urea resin, melanin-formaldehyde resin, etc.). The resin emulsion may include two or more resins. The two or more resins may form a core/shell structure. The resin emulsion may be used alone or in combination of two or more. Among the resin emulsions, the styrene-butadiene resin emulsions and the urethane resin emulsions are preferred in terms of ink performance.

Styrene-butadiene resin emulsions are often sold, for example, in the form of latex (emulsion) and can be readily purchased. Specific examples may include, for example, Nipol LX415M, Nipol LX432M, Nipol LX433C, Nipol LX421, Nipol 2507H, and Nipol LX303A (produced by ZEON Corporation), latex grades 0695, 0696, 0561, 0589, 0602, 2108, 0533, 0545, 0548, 0568, 0569, 0573, 0597C, and 0850Z (produced by JSR Corporation), and most of the specific examples are liquids that are emulsified with resin and have 30% to 60% solid content. Any of the above latexes can be used as the styrene-butadiene resin, and the latex is preferably a carboxy-modified styrene-butadiene resin. Examples of such resins include Nipol LX415M, Nipol LX432M, Nipol LX433C, Nipol LX421, 0695, 0696, 0533, 0545, 0548, 0568, 0569, 0573, 0597C, and 0850Z. The resins are preferably 0695, 0533, 0568, 0597C, and 0850Z, and more preferably JSR 0568 (produced by JSR Corporation). These styrene-butadiene resins may be used singly or in combination of two or three.

The content of the styrene-butadiene resin emulsions is preferably 1% to 30% of the ink composition.

Urethane resin emulsions are commercially available and are mostly emulsions with a solid content of 30 mass% to 60 mass%. Commercially available products of urethane resin emulsions may include, for example, Permalin UA-150, 200, 310, 368, and 3945; and Ucoat UX-320 (produced by Sanyo Chemical Industries, Ltd.); latexes of Hydran WLS-201, 202, 210, 213, 221, 230, and 250; HW-312B (produced by DIC Corporation); and Super Flex 150, 170, and 470 (produced by DKS Co. Ltd.). Among these urethane resin emulsions, Permalin UA-310, 3945; and Ucoat UX-320 are listed as examples of polycarbonate-based urethane resins. Permalin UA-150 and 200; and Ucoat UX-340 are listed as examples of polyether-based urethane resins.

When the urethane resin in the urethane resin emulsion has an acidic group such as a carboxy group, a sulfo group, a hydroxyl group, etc., the acidic group may be converted to an alkali salt. For example, the urethane resin with an acidic group may be charged into water and stirred to prepare an aqueous solution, and then an alkaline compound may be charged into the aqueous solution to adjust the pH to 6.0 to 12.0, to thereby convert the acidic group to an alkali salt. The alkaline compound may include, for example, a hydroxide of an alkali metal such as lithium hydroxide, sodium hydroxide, and potassium hydroxide; and a hydroxide of an alkaline earth metal such as beryllium hydroxide, magnesium hydroxide, calcium hydroxide, and strontium hydroxide. These alkaline compounds may be used singly or in combination of two or more.

### [Surfactant]

The surfactant in the ink composition may include publicly known surfactants such as an anionic surfactant, a cationic surfactant, a nonionic surfactant, an amphoteric surfactant, a silicone surfactant, and a fluorinated surfactant. The anionic surfactant may include alkyl sulfonates, alkyl carboxylates, α-olefin sulfonates, polyoxyethylene alkyl ether acetates, N-acylamino acids and salts thereof, N-acylmethyl taurates, alkyl sulfates polyoxyalkyl ether sulfates, alkyl sulfates polyoxyethylene alkyl ether phosphates, rosinic acid soaps, castor oil sulfates, lauryl alcohol sulfates, alkyl phenol type phosphates, alkyl type phosphates, alkyl aryl sulfonates, diethyl sulfo succinates, diethylhexylsulfo succinates, and dioctyl sulfo succinates. Specific examples of commercially available products thereof may include, for example, Hytenol LA-10, LA-12, LA-16, Neohytenol ECL-30S, and ECL-45 produced by DKS Co. Ltd. The cationic surfactant may include 2-vinylpyridine derivatives and poly4-vinylpyridine derivatives. The nonionic surfactant may include ethers such as polyoxyethylene nonylphenyl ether, polyoxyethylene octylphenyl ether, polyoxyethylene dodecyl phenyl ether, polyoxyethylene oleyl ether, polyoxyethylene lauryl ether, polyoxyethylene alkyl ether; esters such as polyoxyethylene oleate, polyoxyethylene distearate, sorbitan laurate, sorbitan monostearate, sorbitan monooleate, sorbitan sesquioleate, polyoxyethylene monooleate, polyoxyethylene stearate; acetylene glycols (alcohols) such as 2,4,7,9-tetramethyl-5-decyne-4,7-diol, 3,6-dimethyl-4-octyne-3,6-diol, 3,5-dimethyl-1-hexyne-3-ol; compounds available under the trade names of Surfynol 104, 105, 82, and 465, and Olfine STG, produced by Nissin Chemical Industry Co., Ltd.; and polyglycol ethers (for example, compounds available under the trade names of Tergitol 15-S-7, etc. produced by Sigma-Aldrich). The amphoteric surfactant may include lauryl dimethylamino acetate betaine, 2-alkyl-N-carboxymethyl-N-hydroxyethyl imidazolinium betaine, coconut oil fatty acid amido propyl dimethylaminoacetate betaine, polyoctyl polyaminoethylglycine, and imidazoline derivatives. The silicone surfactant may include, for example, polyether-modified siloxane and polyether-modified polydimethylsiloxane. Specific examples of commercially available products thereof may include, for example: BYK-347 (polyether-modified siloxane); and BYK-345 and BYK-348 (polyether-modified polydimethylsiloxane), both are produced by BYK. The fluorinated surfactant may include, for example, perfluoroalkyl sulfonic acid compounds, perfluoroalkyl carboxylic acid compounds, perfluoroalkyl phosphate compounds, perfluoroalkyl ethylene oxide adducts, and polyoxyalkylene ether polymer compounds with perfluoroalkyl ether groups in a side chain. Specific examples of commercially available products thereof may include, for example, Zonyl TBS, FSP, FSA, FSN-100, FSN, FSO-100, FSO, FS-300, Capstone FS-30, and FS-31 (produced by DuPont); and PF-151N and PF-154N (produced by Omnova Solutions).

As used herein, "inkjet textile printing" refers to recording (printing) ink on (a surface of) a fabric, which is a type of recording medium, using an inkjet method and is a type of inkjet recording. "Recorded material" refers to an image formed by ink recorded on a recording medium. "Printed material" is included in the above-described recorded material, and refers to an image formed by ink recorded on (a surface of) a fabric, which is a type of recording medium.

"Fabric" refers to all clothing materials composed of fibers, whether woven or knitted, and the manufacturing methods of fabrics are not particularly limited. The fabric may be pre-dyed with dyes, pigments, or other colorants. The types of fibers that make up the fabric are not particularly limited. Example thereof may include, for example, a fiber selected from natural fibers such as silk, cotton, wool, and synthetic fibers such as nylon and polyester, or cellulose fibers such as rayon and cupra, and blended fibers thereof. Among these, cotton and blended fibers containing cotton, polyester, and blended fibers containing polyester are preferred, and when the fabrics are pre-dyed, cotton is particularly preferred in terms of preventing dye transfer.

### <Ink Set for Inkjet Textile Printing>

The inkjet textile printing ink set including the above pretreatment liquid for inkjet textile printing and an inkjet textile printing ink including pigments and water is also included in the present disclosure.

In the ink set for inkjet textile printing (hereinafter referred to as ink set), the pretreatment liquid may be used alone or in combination of two or more. Further, the inkjet textile printing ink including the above pigments and water may also be used alone or in combination of two or more.

The pretreatment liquid according to the present disclosure enables the provision of ink sets for inkjet textile printing with excellent stability of the pretreatment liquid, water resistance, texture, and feel of the printed material, as well as excellent color development of the resulting printed material. It is also possible to produce printed material that is less likely to have treatment marks on the fabric, the treatment marks being resulting from the pretreatment liquid.

"Fewer treatment marks" means a property of providing little color difference between non-pretreated portions and pretreated portions on the pretreated fabric. "Water resistance" refers to a property of a printed fabric suffering little damage, such as peeling of the coating film, when the fabric is subjected to a washing hardness test. "Color development" refers to a property of ink printed on a fabric being highly efficient in coloring, such that the ink fully develops its color. "Storage stability" means that the ink can be stored while maintaining a low viscosity and excellent storage stability of the ink. The storage stability refers to a property of the viscosity and other liquid properties of the ink not changing easily before and after storage at 60°C for two days.

### <Inkjet Textile Printing Method>

The present disclosure also includes an inkjet textile printing method which uses the above pretreatment liquid. The inkjet textile printing method includes forming an image on a fabric by inkjet textile printing using the inkjet textile printing ink set of the above embodiment. More specifically, the inkjet textile printing method preferably includes:
a pretreatment step of applying the pretreatment liquid for inkjet textile printing of the above embodiment to the fabric; and
an image forming step of making the inkjet textile printing ink composition of the above embodiment adhere to the fabric after the pretreatment step to form an image. The image forming step includes, for example, an adhesion step of making the ink composition adhere to the fabric, and a heating step of heating the fabric, on which the ink composition is applied.

In the inkjet textile printing method described above, the ink composition is loaded into an inkjet textile printing device and used. The inkjet textile printing device is not particularly limited, and includes, for example, a drop-on-demand inkjet textile printing device. The drop-on-demand inkjet textile printing device may include a device employing the inkjet textile printing method using a piezoelectric element installed in the printhead, a device employing the inkjet textile printing method using thermal energy from a heater or other means of a heat-generating resistive element installed in the printhead, and a device employing any inkjet textile printing method.

### [Pretreatment Step]

To prevent ink from bleeding on (a surface of) a fabric, the fabric is pretreated with the pretreatment liquid before the ink composition is made to adhere to the fabric to form an image, that is, the fabric is subjected to a pretreatment step. The pretreatment step involves applying the pretreatment liquid of the above embodiment to a fabric, in which after the pretreatment liquid is made to adhere, the fabric may either be dried, or not be dried to form a moistened precoat layer with the pretreatment liquid.

The method used in the above pretreatment step is not particularly limited, and includes, for example, soaking a fabric in the pretreatment liquid, and coating or spraying the fabric with the pretreatment liquid.

When drying a fabric after the pretreatment liquid made to adhere to the fabric, the fabric may be subjected to a heat treatment with a heating temperature of 110°C to 200°C, and preferably 120°C to 180°C, for up to 2 minutes. The heating temperature being 110°C or more makes the fixation of the pretreatment liquid favorable. When the heating temperature is 200°C or less, degradation of the fabric and degradation of the pretreatment liquid, such as the polymers, can be effectively prevented.

When moistening a fabric with the pretreatment liquid to form a moist precoat layer without drying the fabric after the pretreatment liquid is made to adhere to the fabric, the amount of pretreatment liquid for inkjet textile printing applied to the fabric per unit area preferably exceeds 0.035 g/cm² and is less than 0.070 g/cm² and is more preferably 0.039 g/cm² to 0.063 g/cm².

When using polyester fibers (mesh fabric used for sportswear, etc.), thin fabrics, or coarse-weave fabrics, applying more than 0.035 g/cm² of the pretreatment liquid makes it easy for ink droplets discharged by the inkjet method to infiltrate (penetrate) to the opposite side of fiber that is not being textile printed, thereby enabling ink bleed-through to be suppressed, which tends to result in an image with high color development. Applying less than 0.070 g/cm² of the pretreatment liquid tends to suppress treatment marks where the pretreatment liquid is applied.

When moistening the fabric with the pretreatment liquid to form a moist precoat layer without drying the fabric after the pretreatment liquid is made to adhere to the fabric, it is preferable to comprise a pressurization step of applying pressure to the area, on which the moist precoat layer has been formed. Such a step tends to improve whiteness, opacity, abrasion resistance, and adhesion by enabling the formation of a uniform moist precoat layer with little fibrillation, especially when using cotton fibers or lined knit materials that are likely to cause much fibrillation, and by suppressing unevenness in a white substrate.

The method used in the aforementioned pressurization step of applying pressure is not particularly limited, and may include, for example, a method of using commercially available rollers or spatulas, and a method of using flat plate presses or roller presses.

### [Image Formation Step]

The adhesion step, which can be included in the image forming step, involves first discharging the ink composition and making the ink composition adhere to the fabric, which has undergone the above pretreatment, to form (record) an image.

The discharge conditions may be determined according to the physical properties of the ink composition to be discharged.

The heating step, which can be included in the image forming step, subjects the fabric, to which the ink composition has adhered, to the heat-treatment. The heat-treatment can further improve the abrasion resistance of the printed material.

The heat-treatment, which can be included in the image forming step, includes, without being limited to, for example, a hot air-drying method, a heat press method, an atmospheric pressure steam method, a high-pressure steam method, and a thermofix method. Heat sources for heating may include, without being limited to, for example, infrared rays (lamps).

When using polyester fibers with deep colors, including black, or blends including polyester fibers, the temperature while drying is preferably 130°C or less and more preferably 120°C to 130°C in terms of preventing dye transfer. Keeping the temperature within the above range while drying can suppress a decrease in whiteness due to dye transfer, which tends to improve abrasion resistance and adhesion. When using fibers other than polyester (e.g., cotton, nylon, etc.), the temperature is preferably 150°C or more, more preferably 150°C to 190°C, and particularly preferably 150°C to 180°C. Keeping the temperature within the above range while drying improves abrasion resistance and adhesion. By making the temperature 190°C or less, heat-induced degradation of the components contained in the fiber and the pretreatment composition can be prevented.

After the heating step, the printed material may be rinsed and dried. At this time, a soaping treatment, i.e., a treatment of washing off unbound pigments with a hot soap solution or the like may be carried out as necessary.

Accordingly, it is possible to obtain a printed material, on which an image is formed (recorded) by the ink set according to the above embodiment, on a recording medium such as a woven fabric. It is also possible to provide an inkjet textile printing method with excellent ink discharge reliability, almost no trace residue of the pretreatment liquid on the fabric, good ink fixation (adhesion) and thus excellent abrasion resistance of the printed material, and improved whiteness leading to excellent whiteness of the imprinted material.

### EXAMPLES

The pretreatment liquid, the ink set, and the textile printing method are described in detail by way of the following examples, and are not limited in any way to the following examples.

### [Materials used for the Preparation of the Pretreatment Liquid]

The main materials of the pretreatment liquid used in the following examples and comparative examples are as follows.

### [1. Cationic Polymer]

Cationic polymer (a): "DK-6804" (epichlorohydrin-modified polyamine resin, weight average molecular weight: 677, resin content (solid content): 55 mass%) produced by Seiko PMC Corporation
Cationic polymer (b): "DK-6810" (epichlorohydrin-modified polyamine resin, weight average molecular weight: 616, resin content (solid content): 55 mass%) produced by Seiko PMC Corporation

### [2. (Meth)acrylate-based Vinyl Copolymer]

(Meth)acrylate-based vinyl copolymer (a): "Mowinyl 6963" (anionic styrene/acrylic resin emulsion, solid content: 45 mass%) produced by Japan Coating Resin co., Ltd.
(Meth)acrylate-based vinyl copolymer (b): "Mowinyl 6960" (anionic styrene/acrylic resin emulsion, solid content: 45 mass%) produced by Japan Coating Resin co., Ltd.
(Meth)acrylate-based vinyl copolymer (c): "Mowinyl 6751D" (anionic acrylic resin emulsion, solid content: 45 mass%) produced by Japan Coating Resin co., Ltd.
(Meth)acrylate-based vinyl copolymer (d): "Mowinyl 6901" (cationic styrene/acrylic resin emulsion, solid content: 45 mass%) produced by Japan Coating Resin co., Ltd.
(Meth)acrylate-based vinyl copolymer (e): "Mowinyl 6951" (cationic acrylic resin emulsion, solid content: 45 mass%) produced by Japan Coating Resin co., Ltd.

### [3. Crosslinking Agent]

Crosslinking agent (a): "Epocros WS-700" (polymer containing an oxazoline group, solid content: 25%) produced by Nippon Shokubai Co. Ltd.
Crosslinking agent (b): "Carbodilite E-02" (polymer containing a carbodiimide group, solid content: 40%) produced by Nisshinbo Chemical Inc.
Crosslinking agent (c): "Meikanate NBP-211" (polymer containing a block-type isocyanate group, solid content: 40%) produced by Meisei Chemical Works, Ltd.

### [Weight Average Molecular Weight of the Cationic Polymer]

Measurements were made with gel permeation chromatography in [GPC system (HLC-8320GPC EcoSEC) produced by Tosoh Corporation, two connected columns (TSKgel Super AW4000 and TSKgel Super AW3000) produced by Tosoh Corporation, flow rate: 0.6 mL/min] using acetic acid (500 mM) and Na₂NO₃ (200 mM) in aqueous solution as the development solvent and polystyrene as a reference material.

### [Example 1]

A pretreatment liquid (1) for inkjet textile printing was obtained by mixing 182 parts by mass (solid content: 100 parts by mass) of the cationic polymer (a), 66.7 parts by mass (solid content: 30 parts by mass) of the (meth)acrylate-based vinyl copolymer (a) and 16 parts by mass (solid content: 4 parts by mass) of the crosslinking agent (a), then adding water such that the solid content by weight was 7 mass%, and mixing to form a homogeneous mixture.

### [Example 2]

A pretreatment liquid (2) for inkjet textile printing was obtained in the same manner as in Example 1, except that the amount of the (meth)acrylate-based vinyl copolymer (a) used in Example 1 was changed from 66.7 parts by mass to 11.1 parts by mass (solid content: 5 parts by mass).

### [Example 3]

A pretreatment liquid (3) for inkjet textile printing was obtained in the same manner as in Example 1, except that the amount of the (meth)acrylate-based vinyl copolymer (a) used in Example 1 was changed from 66.7 parts by mass to 33.4 parts by mass (solid content: 15 parts by mass).

### [Example 4]

A pretreatment liquid (4) for inkjet textile printing was obtained in the same manner as in Example 1, except that the amount of the (meth)acrylate-based vinyl copolymer (a) used in Example 1 was changed from 66.7 parts by mass to 133 parts by mass (solid content: 60 parts by mass).

### [Example 5]

A pretreatment liquid (5) for inkjet textile printing was obtained in the same manner as in Example 1, except that the amount of the (meth)acrylate-based vinyl copolymer (a) used in Example 1 was changed from 66.7 parts by mass to 200 parts by mass (solid content: 90 parts by mass).

### [Example 6]

A pretreatment liquid (6) for inkjet textile printing was obtained in the same way as in Example 1, except that the cationic polymer (a) used in Example 1 was changed to 182 parts by mass (solid content: 100 parts by mass) of the cationic polymer (b).

### [Example 7]

A pretreatment liquid (7) for inkjet textile printing was obtained in the same manner as in Example 1, except that the (meth)acrylate-based vinyl copolymer (a) used in Example 1 was changed to 66.7 parts by mass (solid content: 30 parts by mass) of the (meth)acrylate-based vinyl copolymer (b).

### [Example 8]

A pretreatment liquid (8) for inkjet textile printing was obtained in the same manner as in Example 1, except that the (meth)acrylate-based vinyl copolymer (a) used in Example 1 was changed to 60.0 parts by mass (solid content: 30 parts by mass) of the (meth)acrylate-based vinyl copolymer (c).

### [Example 9]

A pretreatment liquid (9) for inkjet textile printing was obtained in the same manner as in Example 1, except that the (meth)acrylate-based vinyl copolymer (a) used in Example 1 was changed to 66.7 parts by mass (solid content: 30 parts by mass) of the (meth)acrylate-based vinyl copolymer (d).

### [Example 10]

A pretreatment liquid (10) for inkjet textile printing was obtained in the same manner as in Example 1, except that the (meth)acrylate-based vinyl copolymer (a) used in Example 1 was changed to 66.7 parts by mass (solid content: 30 parts by mass) of the (meth)acrylate-based vinyl copolymer (e).

### [Example 11]

A pretreatment liquid (11) for inkjet textile printing was obtained in the same way as in Example 1, except that the crosslinking agent (a) used in Example 1 was changed to 10 parts by mass (solid content: 4 parts by mass) of the crosslinking agent (b).

### [Example 12]

A pretreatment liquid (12) for inkjet textile printing was obtained in the same way as in Example 1, except that the crosslinking agent (a) used in Example 1 was changed to 10 parts by mass (solid content: 4 parts by mass) of the crosslinking agent (c).

### [Example 13]

A pretreatment liquid (13) for inkjet textile printing was obtained in the same manner as in Example 1, except that the amount of the crosslinking agent (a) used in Example 1 was changed from 16 parts by mass (solid content: 4 parts by mass) to 8 parts by mass (solid content: 2 parts by mass).

### [Example 14]

A pretreatment liquid (14) for inkjet textile printing was obtained in the same manner as in Example 1, except that the amount of the crosslinking agent (a) used in Example 1 was changed from 16 parts by mass (solid content: 4 parts by mass) to 28 parts by mass (solid content: 7 parts by mass).

### [Example 15]

A pretreatment liquid (15) for inkjet textile printing was obtained in the same manner as in Example 1, except that the amount of the crosslinking agent (a) used in Example 1 was changed from 16 parts by mass (solid content: 4 parts by mass) to 40 parts by mass (solid content: 10 parts by mass).

### [Example 16]

A pretreatment liquid (16) for inkjet textile printing was obtained in the same way as in Example 1, except that the amount of the crosslinking agent (a) used in Example 1 was changed from 16 parts by mass (solid content: 4 parts by mass) to 80 parts by mass (solid content: 20 parts by mass).

### [Example 17]

A pretreatment liquid (17) for inkjet textile printing was obtained in the same way as in Example 1, except that the amount of water added in Example 1 was adjusted, and the solid content by weight was changed from 7 mass% to 2 mass%.

### [Example 18]

A pretreatment liquid (18) for inkjet textile printing was obtained in the same way as in Example 1, except that the amount of water added in Example 1 was adjusted, and the solid content by weight was changed from 7 mass% to 4 mass%.

### [Example 19]

A pretreatment liquid (19) for inkjet textile printing was obtained in the same way as in Example 1, except that the amount of water added in Example 1 was adjusted, and the solid content by weight was changed from 7 mass% to 10 mass%.

### [Example 20]

A pretreatment liquid (20) for inkjet textile printing was obtained in the same way as in Example 1, except that the amount of water added in Example 1 was adjusted, and the solid content by weight was changed from 7 mass% to 20 mass%.

### [Example 21]

A pretreatment liquid (21) for inkjet textile printing was obtained in the same way as in Example 1, except that the amount of water added in Example 1 was adjusted, and the solid content by weight was changed from 7 mass% to 30 mass%.

### [Example 22]

A pretreatment liquid (22) for inkjet textile printing was obtained in the same way as in Example 1, except that 10 parts by mass of 1,2-hexanediol was added as an aqueous solvent to Example 1. It had a dynamic surface tension of 55 mN/m. The dynamic surface tension was measured at 10 Hz using a commercially available bubble pressure dynamic surface tension meter, "SITA Science line T-60".

### [Example 23]

A pretreatment liquid (23) for inkjet textile printing was obtained in the same way as in Example 1, except that 50 parts by mass of 1,2-hexanediol was added as an aqueous solvent to Example 1. It had a dynamic surface tension of 40 mN/m. The dynamic surface tension was measured under the same conditions as in Example 22.

### [Comparative Example 1]

A pretreatment liquid (24) for inkjet textile printing was obtained in the same way as in Example 1, except that the (meth)acrylate-based vinyl copolymer (a) used in Example 1 was not added.

### [Comparative Example 2]

A pretreatment liquid (25) for inkjet textile printing was obtained in the same manner as in Example 1, except that the amount of the (meth)acrylate-based vinyl copolymer (a) used in Example 1 was changed from 66.7 parts by mass to 335 parts by mass (solid content: 150 parts by mass).

### [Comparative Example 3]

A pretreatment liquid (26) for inkjet textile printing was obtained in the same manner as in Example 1, except that the amount of the (meth)acrylate-based vinyl copolymer (a) used in Example 1 was changed from 66.7 parts by mass to 446 parts by mass (solid content: 200 parts by mass).

### [Comparative Example 4]

A pretreatment liquid (27) for inkjet textile printing was obtained in the same manner as in Example 1, except that the amount of the (meth)acrylate-based vinyl copolymer (a) used in Example 1 was changed from 66.7 parts by mass to 669 parts by mass (solid content: 300 parts by mass).

### [Comparative Example 5]

A pretreatment liquid (28) for inkjet textile printing was obtained in the same way as in Example 1, except that the crosslinking agent (a) used in Example 1 was not added.

### [Comparative Example 6]

A pretreatment liquid (29) for inkjet textile printing was obtained in the same manner as in Example 1, except the amount of the crosslinking agent (a) used in Example 1 was changed from 16 parts by mass (solid content: 4 parts by mass) to 4 parts by mass (solid content: 1 part by mass).

### [Comparative Example 7]

A pretreatment liquid (30) for inkjet textile printing was obtained in the same manner as in Example 1, except that the amount of the crosslinking agent (a) used in Example 1 was changed from 16 parts by mass (solid content: 4 parts by mass) to 100 parts by mass (solid content: 30 parts by mass).

### [Comparative Example 8]

A pretreatment liquid (31) for inkjet textile printing was obtained in the same way as in Example 1, except that the amount of water added in Example 1 was adjusted, and the solid content by weight was changed from 7 mass% to 40 mass%.

### [Preparation of Ink for Inkjet Textile Printing]

After mixing the ingredients listed in Table 1 below by stirring at room temperature for 1 hour, the mixture was passed through a filter of mixed cellulose ester with a pore diameter of 5 µm (membrane filter manufactured by Advantec Toyo Kaisha, Ltd.) and then degassed using a vacuum pump to obtain Ink 1 for testing. The preparation of Ink 1 used FUJI SP SAMPLE 138 (solid content: 50%, produced by Fuji Pigment Co., Ltd.) as a pigment dispersion liquid, Hydran WLS-201 (produced by DIC Corporation) as urethane resin, PROXEL GXL (S) (produced by Lonza) as a preservative, and Olfine EXP-4001 (produced by Nissin Chemical Industry Co., Ltd.) as a surfactant. The numbers in Table 1 below represent "parts" and "TEA" represents triethanolamine.

**[Table 1]**

| Component | Ink 1 |
|---|---|
| FUJI SP SAMPLE 138 | 20 |
| Hydran WLS-201 | 43 |
| Glycerin | 18 |
| Olfine EXP-4001 | 0.8 |
| PROXEL GXL(S) | 0.1 |
| 25% NaOH (aq) | 0.6 |
| TEA | 0.4 |
| Water | 17.1 |
| Total | 100 |

### [Method of Creating Recorded Materials]

### [Pretreatment Step]

The pretreatment liquids (1) to (31) for inkjet textile printing obtained above were each applied to cotton fabric (T-shirt, black 00085-CVT heavyweight T-shirt (produced by PrintStar)) to achieve an adhering amount of 0.02 g/cm² over an A4-sized area using a commercially available mist spray (PET150B M Mist produced by Takahashi Kasei Co. Ltd.). Subsequently, the cotton fabrics (1 mf) to (31 mf) were heat-dried at 175°C for 60 seconds using a tabletop automatic flat press machine (AF-65TEN produced by Asahi Garment Machinery Co. Ltd.) to obtain pretreated fabrics (1 mf) to (31 mf). The following recording step was then carried out.

### [Recording Step]

An industrial inkjet evaluation system (extended dispensing system EV2500 produced by Ricoh Company, Ltd.) was filled with the inkjet textile printing ink (Ink 1) which was prepared as described above. Then, the inkjet textile printing ink (Ink 1) was made to adhere to a portion of the surface area of the pretreated fabrics (1 mf) to (31 mf) obtained as described above to form an image with a solid white pattern under the following conditions: ink droplet weight 29 pl/dot, printhead temperature 25°C, resolution 600 × 1200 dpi, and overprinted 6 times. Then, a tabletop automatic flat press machine (Asahi Textile Machinery Corporation: AF-65TEN) was used to heat-dry the preheated fabrics at 175°C for 60 seconds to obtain white textile dyed fabrics (1nf) to (31nf). The pretreatment step and the recording step were performed at a room temperature of 25°C.

### [Color Development]

The white textile fabrics obtained above were evaluated for color development by measuring the L* value thereof. The L* values in the CIE/L*a*b* color system were measured using an eXact colorimeter manufactured by X-Rite. The colorimetric measurements were made under the conditions of a D65 observation light source, a field of view of 2°, and Status T density. Three colorimetric measurements were taken of fibers for each evaluation, and the average value was evaluated according to the following evaluation criteria. The evaluation results are listed in Tables 2 to 4. Larger L* values exhibit higher whiteness and are preferred.

### (Evaluation Criteria)

A: L* = 92 or more
B: L* = 90 or more and less than 92
C: L* = less than 90

### [Water Resistance]

The water resistance of the textile fabrics obtained above was determined by a color-fastness-to-washing test. The color-fastness-to-washing test was repeated three times in accordance with the "American Association of Textile Chemists and Colorists (AATCC) Method 61 2A" and evaluated according to the following evaluation criteria. The evaluation results are listed in Tables 2 to 4.

### (Evaluation Criteria)

A: No removal after three repetitions of the test.
B: Slight partial removal of the film is observed after three repetitions of the test.
C: The film has been removed and the substrate is visually visible after three repetitions of the test.

### [Pretreatment Traces (Trace Residue)]

Pretreated fabrics were prepared using the pretreatment liquids (1) to (31) for inkjet textile printing in the same way as in the pretreatment step described above. The pretreatment liquid adhering portions (no ink adhered) and the pretreatment liquid non-adhering portions (no pretreatment liquid and no ink adhered) were visually compared to check for pretreatment traces (white trace residue) in the pretreatment liquid adhering portions. The evaluation results are listed in Tables 2 to 4.

### (Evaluation Criteria)

A: No white trace residue.
B: Some white trace residue.
C: Significant white trace residue.

### [Storage Stability Test]

The pretreatment liquids (1) to (31) obtained above were sealed, in an amount of 2 ml, in a commercially available 8 ml glass sample bottle (produced by Nichiden Rika-Glass Co., Ltd.), stored at 60°C for one week, and changes in appearance after storage were evaluated using the following criteria. The evaluation results are listed in Tables 2 to 4. In Tables 2-4, pretreatment liquid Nos. 1 to 31 represent the pretreatment liquids (1) to (31) obtained above, respectively.

### (Evaluation Criteria)

A: No change in appearance was observed before and after storage.
B: After storage, slight aggregation is observed, and there is no change in the flowability of the pretreatment liquid.
C: After storage, there is significant aggregation, and the pretreatment liquid has lost flowability thereof.

**[Table 2]**

| | | | EXAMPLE | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Pretreatment Liquid No. | | | 1 | 2 | 3 | 4 | 5 | 6 | 7 | 8 | 9 | 10 | 11 | 12 |
| Composition (part by mass) | (A) | Cationic polymer (a) | 100 | 100 | 100 | 100 | 100 | | 100 | 100 | 100 | 100 | 100 | 100 |
| | | Cationic polymer (b) | | | | | | 100 | | | | | | |
| | (B) | (Meth)acrylate-based vinyl copolymer (a) | 30 | 5 | 15 | 60 | 90 | 30 | | | | | 30 | 30 |
| | | (Meth)acrylate-based vinyl copolymer (b) | | | | | | | 30 | | | | | |
| | | (Meth)acrylate-based vinyl copolymer (c) | | | | | | | | 30 | | | | |
| | | (Meth)acrylate-based vinyl copolymer (d) | | | | | | | | | 30 | | | |
| | | (Meth)acrylate-based vinyl copolymer (e) | | | | | | | | | | 30 | | |
| | (C) | Crosslinking agent (a) | 4 | 4 | 4 | 4 | 4 | 4 | 4 | 4 | 4 | 4 | | |
| | | Crosslinking agent (b) | | | | | | | | | | | 4 | |
| | | Crosslinking agent (c) | | | | | | | | | | | | 4 |
| | 1,2-Hexanediol | | | | | | | | | | | | | |
| Physical properties | | Solid content by weight | 7% | 7% | 7% | 7% | 7% | 7% | 7% | 7% | 7% | 7% | 7% | 7% |
| | | Dynamic surface tension (mN/m) | 66 | 64 | 62 | 66 | 64 | 64 | 64 | 62 | 62 | 65 | 69 | 66 |
| Evaluation | | Color development | A | A | A | A | A | A | A | A | A | A | A | A |
| | | Trace residue | A | A | A | A | B | A | A | B | A | A | B | A |
| | | Storage stability | A | A | A | A | A | A | A | B | A | A | A | A |
| | | Water resistance | A | A | A | A | A | A | A | A | A | A | A | A |

**[Table 3]**

| | | | EXAMPLE | | | | | | | | | | |
|---|---|---|---|---|---|---|---|---|---|---|---|---|---|
| | | | 13 | 14 | 15 | 16 | 17 | 18 | 19 | 20 | 21 | 22 | 23 |
| Pretreatment Liquid No. | | | 13 | 14 | 15 | 16 | 17 | 18 | 19 | 20 | 21 | 22 | 23 |
| Composition (part by mass) | (A) | Cationic polymer (a) | 100 | 100 | 100 | 100 | 100 | 100 | 100 | 100 | 100 | 100 | 100 |
| | | Cationic polymer (b) | | | | | | | | | | | |
| | (B) | (Meth)acrylate-based vinyl copolymer (a) | 30 | 30 | 30 | 30 | 30 | 30 | 30 | 30 | 30 | 30 | 30 |
| | | (Meth)acrylate-based vinyl copolymer (b) | | | | | | | | | | | |
| | | (Meth)acrylate-based vinyl copolymer (c) | | | | | | | | | | | |
| | | (Meth)acrylate-based vinyl copolymer (d) | | | | | | | | | | | |
| | | (Meth)acrylate-based vinyl copolymer (e) | | | | | | | | | | | |
| | (C) | Crosslinking agent (a) | 2 | 7 | 10 | 20 | 4 | 4 | 4 | 4 | 4 | 4 | 4 |
| | | Crosslinking agent (b) | | | | | | | | | | | |
| | | Crosslinking agent (c) | | | | | | | | | | | |
| | 1,2-Hexanediol | | | | | | | | | | | 10 | 50 |
| Physical properties | | Solid content by weight | 7% | 7% | 7% | 7% | 2% | 4% | 10% | 20% | 30% | 7% | 7% |
| | | Dynamic surface tension (mN/m) | 64 | 62 | 61 | 60 | 70 | 66 | 62 | 60 | 58 | 55 | 40 |
| Evaluation | | Color development | A | A | A | A | B | A | A | A | A | A | A |
| | | Trace residue | A | A | A | B | A | A | A | B | B | A | A |
| | | Storage stability | A | A | A | A | A | A | A | A | A | A | A |
| | | Water resistance | A | A | A | A | A | A | A | A | A | A | A |

**[Table 4]**

| | | | Comparative example | | | | | | | |
|---|---|---|---|---|---|---|---|---|---|---|
| | | | 1 | 2 | 3 | 4 | 5 | 6 | 7 | 8 |
| Pretreatment Liquid No. | | | 24 | 25 | 26 | 27 | 28 | 29 | 30 | 31 |
| Composition (part by mass) | (A) | Cationic polymer (a) | 100 | 100 | 100 | 100 | 100 | 100 | 100 | 100 |
| | | Cationic polymer (b) | | | | | | | | |
| | (B) | (Meth)acrylate-based vinyl copolymer (a) | | 150 | 200 | 300 | 30 | 30 | 30 | 30 |
| | | (Meth)acrylate-based vinyl copolymer (b) | | | | | | | | |
| | | (Meth)acrylate-based vinyl copolymer (c) | | | | | | | | |
| | | (Meth)acrylate-based vinyl copolymer (d) | | | | | | | | |
| | | (Meth)acrylate-based vinyl copolymer (e) | | | | | | | | |
| | (C) | Crosslinking agent (a) | 4 | 4 | 4 | 4 | | 1 | 30 | 4 |
| | | Crosslinking agent (b) | | | | | | | | |
| | | Crosslinking agent (c) | | | | | | | | |
| | 1,2-Hexanediol | | | | | | | | | |
| Physical properties | | Solid content by weight | 7% | 7% | 7% | 7% | 7% | 7% | 7% | 40% |
| | | Dynamic surface tension (mN/m) | 63 | 63 | 63 | 63 | 72 | 69 | 60 | 57 |
| Evaluation | | Color development | C | B | C | C | A | A | A | A |
| | | Trace residue | A | C | C | C | A | A | C | C |
| | | Storage stability | A | A | A | A | A | A | A | A |
| | | Water resistance | B | C | C | C | C | C | A | A |

From the results in Table 2-4 above, if was found that the pretreatment liquids in the examples above showed at least equal or better results in water resistance compared to the pretratment liquids in the comparative examples, and also showed high color development and trace residue prevention properties. In addition, the color development, trace residue, storage stability, and water resistance were all rated B or better. Thus, it was found that the pretreatment liquids in the examples have excellent utility that combines color development, trace residue prevention properties, storage stability, and water resistance.

### INDUSTRIAL APPLICABILITY

The pretreatment liquid for inkjet textile printing is extremely useful for textiles in that the pretreatment liquid does not leave traces on the fabric when the treatment solution is applied while showing good color development in the inkjet textile printing process, the treatment liquid has excellent storage stability, and also the printed materials have excellent color fastness to washing.

## Claims

1. A pretreatment liquid for inkjet textile printing, containing:
100 parts by mass of a cationic polymer (A);
5 parts by mass or more and less than 100 parts by mass of a (meth)acrylate-based vinyl copolymer (B); and
2 parts by mass or more and less than 30 parts by mass of a crosslinking agent (C), each being in solid content, and
water,
wherein the liquid has a solid content by weight of 2 mass% or more and 30 mass% or less.

2. The pretreatment liquid for inkjet textile printing according to claim 1, wherein the crosslinking agent (C) comprises any compound selected from the group consisting of a compound having a blocked isocyanate group, a compound having an oxazoline group, and a compound having a carbodiimide group.

3. The pretreatment liquid for inkjet textile printing according to claim 1 or 2, wherein the cationic polymer (A) is a compound containing an epihalohydrin structural unit.

4. The pretreatment liquid for inkjet textile printing according to any one of claims 1 to 3, wherein the cationic polymer (A) comprises any resin selected from the group consisting of an epihalohydrin-modified polyamine resin, an epihalohydrin-modified polyamide resin, an epihalohydrin-modified polyamide polyamine resin, and an epihalohydrin-amine copolymer.

5. The pretreatment liquid for inkjet textile printing according to any one of claims 1 to 4, wherein the (meth)acrylate-based vinyl copolymer (B) comprises a copolymerized polymer derived from an alkyl (meth)acrylate (b1), a monomer having a carboxyl group (b2), and a styrene derivative (b3) as monomer components.

6. The pretreatment liquid for inkjet textile printing according to any one of claims 1 to 5, which has a dynamic surface tension value at 25°C of 40 mN/m or more and 70 mN/m or less.

7. A textile printing method, comprising applying the pretreatment liquid for inkjet textile printing according to any one of claims 1 to 6 to a fabric and subsequently discharging, from an inkjet printhead, an inkjet textile printing ink comprising pigments and water to record an image on the fabric.

8. A textile printing method, comprising:
a pretreatment step of applying the pretreatment liquid for inkjet textile printing according to any one of claims 1 to 6 to a fabric to form a moist precoat layer; and
a step of discharging, from an inkjet printhead, to a portion or an entire area of the moist precoat layer, an inkjet textile printing ink comprising pigments and water, without drying the fabric after the pretreatment step, to record an image on the fabric,
wherein the pretreatment liquid for inkjet textile printing is applied on the fabric in an amount per unit area exceeding 0.035 g/cm² and being less than 0.070 g/cm².

9. The textile printing method according to claim 7 or 8, wherein the fabric is polyester or a blend including polyester.

10. The textile printing method according to claim 9, comprising
a step of drying, at 130°C or less, the fabric, on which the image has been formed, after the step of discharging, from the inkjet printhead, the inkjet textile printing ink comprising pigments and water to record the image on the fabric.

11. The textile printing method according to claim 7 or 8, wherein the fabric is cotton or a blend including cotton.

12. The textile printing method according to any one of claims 8 to 11, comprising
a pressurization step of applying pressure to an area, on which the moist precoat layer has been formed, after the pretreatment step.

13. An ink set for inkjet textile printing comprising:
the pretreatment liquid for inkjet textile printing according to any one of claims 1 to 6; and
an inkjet textile printing ink comprising pigments and water.
